Europäisches Patentamt

European Patent Office

Office européen des brevets

(11) Veröffentlichungsnummer: **0 459 974 B1**

(12) **EUROPÄISCHE PATENTSCHRIFT**

(45) Veröffentlichungstag der Patentschrift: **21.12.94**

(51) Int. Cl.5: **A23B 4/023**

(21) Anmeldenummer: **91890120.8**

(22) Anmeldetag: **31.05.91**

(54) **Verfahren zum Behandeln von Fleisch sowie Vorrichtung zur Durchführung dieses Verfahrens.**

(30) Priorität: **01.06.90 AT 1202/90**

(43) Veröffentlichungstag der Anmeldung:
**04.12.91 Patentblatt 91/49**

(45) Bekanntmachung des Hinweises auf die
Patenterteilung:
**21.12.94 Patentblatt 94/51**

(84) Benannte Vertragsstaaten:
**AT CH DE ES FR GB IT LI NL**

(56) Entgegenhaltungen:
**DE-A- 2 720 732**
**DE-A- 3 632 313**
**US-A- 3 928 634**
**US-A- 4 785 727**

(73) Patentinhaber: **SOLICH GESELLSCHAFT m.b.H**
**Hütteldorferstrasse 139**
**A-1140 Wien (AT)**

(72) Erfinder: **Solich, Karl**
**Hütteldorfer Strasse 139**
**A-1140 Wien (AT)**

(74) Vertreter: **Haffner, Thomas M., Dr. et al**
**Patentanwaltskanzlei**
**Dipl.-Ing. Adolf Kretschmer**
**Dr. Thomas M. Haffner**
**Schottengasse 3a**
**A-1014 Wien (AT)**

## Beschreibung

Die Erfindung bezieht sich auf ein Verfahren zum Behandeln von Fleisch zur Erzielung einer längeren Haltbarkeit und zur Erzielung einer besseren Konsistenz bei der nachfolgenden Zubereitung sowie auf eine Vorrichtung zum Behandeln von Fleisch zur Erzielung einer längeren Haltbarkeit und zur Erzielung einer besseren Konsistenz bei der nachfolgenden Zubereitung, mit einem geschlossenen Behälter zur Ausübung einer Schüttelbewegung des Fleisches gemeinsam mit einer gegebenenfalls Gewürze und Salz enthaltenden Lake

Aus der US-PS 3 928 634 ist bereits ein derartiges Verfahren bekanntgeworden, bei welchem Fleisch, insbesondere Geflügelteile, in einer rotieren Trommel im Vakuum für einen bestimmten Zeitraum umgewälzt werden. Zusätzlich zu den Geflügelteilen wird der Trommel eine Marinade, welche beispielsweise Salz und Konservierungsmitteln enthält, zugesetzt. Während der Trommelbewegung werden gemäß diesem bekannten Verfahren wenigstens 2,5 % der Marinade von dem Fleisch aufgenommen.

Zur Behandlung von Fleisch mit dem Ziel, eine längere Haltbarkeit zu gewährleisten, ist es bekannt, Fleisch zu frieren oder zumindest unter Vakuum aufzubewahren. Sowohl beim Frieren von Fleisch als auch bei der Aufbewahrung unter Vakuum tritt ein mehr oder minder ausgeprägter Feuchtigkeitsverlust auf, welcher bei der nachfolgenden Zubereitung zu besonders trockenen Produkten führt. Insbesondere eine Zubereitung durch Braten oder Grillen führt zu einer weiteren deutlichen Abnahme des Flüssigkeitsgehaltes, welchem durch Maßnahmen zum Verschließen der Poren an der Außenseite der zuzubereitenden Fleischstücke nur ungenügend begegnet werden kann. Um die Konsistenz des aus Fleisch zubereiteten Fertigproduktes zu verbessern, ist es bekannt, Fasern zu zerschneiden. Dies kann eines Teils durch Klopfen erfolgen oder aber mit sogenannten "Steakmakern", welche aus einer Mehrzahl scharfer Messern bestehen, welche beim Eindringen in das Fleisch Fasern durchdringen. Auch derartigen Vorbehandlungen, welche darauf abzielen, die Konsistenz des Fertigproduktes zu verbessern und aufzulockern, führen in der Folge zu einem ausgeprägten Feuchtigkeitsverlust, welcher dem Endprodukt nicht zuträglich ist.

Die Erfindung zielt nun darauf ab, ein Verfahren der eingangs genannten Art zu schaffen, mit welchem unmittelbar ein Fertigprodukt mit verbesserter Konsistenz erzielt werden kann und gleichzeitig die Haltbarkeit des zuzubereitenden Produktes wesentlich verbessert werden kann. Zur Lösung dieser Aufgabe besteht das erfindungsgemäße Verfahren im wesentlichen darin, daß die Lake zu 30 bis 50 Gew.-% in Form von Eis eingesetzt wird. Dadurch, daß das Fleisch vor seiner Lagerung oder unmittelbar vor seiner Zubereitung einer Schüttelbewegung in einer eishaltigen Lake unterworfen wird, wird eine Lockerung der Struktur erzielt, wobei gleichzeitig aus der Lake Flüssigkeit in die Fleischstruktur aufgenommen wird. Die besonders vorteilhaften Eigenschaften in bezug auf die Konsistenz des Fertigproduktes sind hiebei durch die Maßnahme zu erzielen, daß 10 bis 20 Gew.-% bezogen auf die Fleischmenge an 30 bis 50 Gew.-% Eis enthaltender Lake eingesetzt werden, wobei die Schüttelbewegung so lange durchgeführt wird, bis die Lake nahezu vollständig vom Fleisch aufgenommen ist. Hiebei wird, um gleichzeitig mit der Aufnahme an Lake eine entsprechende Temperatur für die Aufnahme der Lake im Fleisch und gegebenenfalls eine fasernzerschneidende Behandlung vornehmen zu können, so vorgegegangen, daß die Lake zu 30 bis 50 Gew.-% in Form von Eis eingesetzt wird. Die in der Lake vorliegenden Eisstückchen führen bei der Schüttelbewegung zu einer Zerteilung bzw. zu einem Zerschneiden von Fasern an der Oberfläche der geschüttelten Fleischstücke, wobei gleichzeitig eine Absenkung der Temperatur des eingesetzten Fleisches auf für die Aufnahme von Lake optimale Temperaturen erfolgt.

Ein auf diese Weise vorbehandeltes Fleisch gibt auch bei einer nachfolgenden Lagerung im Vakuum oder beim Tiefkühlen nur mehr einen Bruchteil der aufgenommenen Flüssigkeitsmenge ab, wobei die Anreicherung der Flüssigkeit in der Struktur des zu lagernden Produktes durch Einbau von Lake bei einem nach-folgenden Tieffrieren zu einem weiteren Aufbrechen bzw. Zerteilen von Fasern führt, wodurch insgesamt die Konsistenz eines auf diese Weise vorbehandelten und in der Folge tiefgefrorenen Produktes nach der Zubereitung weiter verbessert werden kann. Das Verfahren kann hiebei so durchgeführt werden, daß vor der Aufnahme von Lake und vor der Schüttelbewegung eine die Fasern zerschneidende Behandlung vorgenommen wird, welche in konventioneller Weise durch die oben beschriebenen Maßnahmen bewerkstelligt werden kann. Eine derartige Vorbehandlung erleichtert die Aufnahme der Lake und verkürzt die erforderliche Behandlungszeit durch Schütteln.

Das erfindungsgemäße Verfahren kann so durchgeführt werden, daß die Schüttelbewegung über einen Zeitraum von wenigstens 10 Minuten, vorzugsweise 30 bis 45 Minuten, und maximal 120 Minuten durchgeführt wird. Die Obergrenze von 120 Minuten für das Massieren bzw. Schütteln des Fleisches ist hiebei gleichfalls von Bedeutung, da ein längeres Schütteln nicht nur zu keiner weiteren Aufnahme von Lake sondern bereits wieder zu einer neuerlichen Abgabe von Lake führt, wodurch der eingetretene Effekt reversibel wird.

Eine Verkürzung des erforderlichen Zeitraumes für die Schüttelbewegung bzw. eine Verbesserung der Aufnahme an Lake kann dadurch erzielt werden, daß das Fleisch vor der Schüttelbewegung einer Vakuumbehandlung unterzogen wird. Eine derartige vorgeschaltete Vakuumbehandlung hat zur Folge, daß nun die Lake rascher von dem geschüttelten Fleisch aufgenommen wird, wobei sich gezeigt hat, daß die Aufnahme der Lake bei einer ungleichmäßigen Schüttelbewegung bedeutend besser als bei einer gleichmäßigen Drehbewegung ist.

Die Aufnahmefähigkeit für Lake ist bei unterschiedlichen Temperaturen verschieden. Prinzipiell sind bei Temperaturen unter 15°C bis zum Gefrierpunkt zulässig, wobei die Geschwindigkeit der Aufnahme und die Vollständigkeit der Aufnahme der Lake bei Temperaturen zwischen 2 und 8°C am günstigsten ist.

Eine besonders rasche und vollständige Aufnahme der Lake läßt sich dadurch erzielen, daß die Lake in Portionen während der Zeit der Schüttelbehandlung zugesetzt wird. Dabei genügen für eine derartige Verfahrensweise zwei Portionen, wobei jeweils die Hälfte der Lake zu Beginn der Schüttelbehandlung und die zweite Hälfte nach etwa 15 Minuten zugesetzt werden kann.

Eine besonders einfache Vorrichtung zum Behandeln von Fleisch zur Erzielung einer längeren Haltbarkeit und zur Erzielung einer besseren Konsistenz bei der nachfolgenden Zubereitung, mit einem geschlossenen Behälter zur Ausübung einer Schüttelbewegung des Fleisches gemeinsam mit einer gegebenenfalls Gewürze und Salz enthaltenden Lake, ist hiebei im wesentlichen gekennzeichnet durch eine rotierbar gelagerte geschlossene Trommel mit im wesentlichen horizontaler Rotationsachse, welche durch einen Deckel verschließbar und zur Rotation um ihre Achse antreibbar ist, wobei die Längsachse der Trommel die Rotationsachse unter Einschluß eines spitzen Winkels schneidet und/oder der Querschnitt der Trommel von der Kreisform abweicht. Die Fleischportionen oder das Fleischstück können innerhalb einer derartigen rotierbar gelagerten Trommel getummelt werden, wobei die Fleischstücke an der Peripherie der Trommel jeweils über eine vorbestimmte Höhe angehoben werden und durch Herabfallen auf die am Grund der Trommel befindliche Lake einer Schüttelbewegung unterworfen werden. Dadurch, daß die Längsachse der Trommel die Rotationsachse unter Einschluß eines spitzen Winkels schneidet und/oder der Querschnitt der Trommel von der Kreisform abweicht, wird sichergestellt, daß die an der Peripherie der Trommel angehobenen Fleischstücke beim Herabfallen gewendet werden, so daß das Fleisch auf allen Seiten gleichmäßig mit der Lake in Berührung kommt. Um sicherzustellen, daß Fleischstücke nicht am Rand der Trommel anhaften, können hiebei im Inneren der Trommel entsprechende Hubelemente angeordnet werden oder aber, wie es einer bevorzugten Ausführung entspricht, die Ausführung so getroffen sein, daß die Drehrichtung des Trommelantriebs umkehrbar ist.

Ein Ankleben der Fleischstücke an das Innere einer derartigen Trommel kann aber in besonders einfacher Weise auch dadurch verhindert werden, daß die vorzerteilten Fleischportionen jeweils gesondert mit einer ihrem Gewicht entsprechenden Menge an Lake in Kunststoffbeutel flüssigkeitsdicht verpackt werden, worauf die jeweils die korrekte Menge an Lake enthaltenden Beutel im Inneren der Trommel der Schüttelbewegung unterworfen werden. Um beim Behandeln des Fleisches in einer derartigen Trommel bei möglichst niedrige Temperaturen arbeiten zu können, kann die Bearbeitungstrommel auch mit einem Doppelmantel ausgebildet sein. Die Kühlung des zu bearbeitenden Fleisches kann hiebei durch Einfüllen von Brucheis, Kältespeichern od.dgl. in dem Doppelmantel erfolgen.

In jedem Falle muß die Geschwindigkeit des Drehantriebes so gewählt werden, daß die Zentrifugalkraft nicht zu groß wird, um ein Herabfallen der Fleischstücke und die gewünschte Schüttelbewegung sowie den gewünschten Massiereffekt für die Aufnahme der Lake sicherzustellen. Die Vorrichtung ist zu diesem Zwecke so ausgebildet, daß der Radius (r) der Trommel und die Winkelgeschwindigkeit ($\omega$) derselben so gewählt sind, daß $r \times \omega^2 <$ g ist, wobei g die Erdbeschleunigung bedeutet.

Um eine einfache Befüllung der Trommel bzw. Entnahme der behandelten Fleischstücke aus der Trommel unabgängig vom Ausmaß der Befüllung sicherzustellen, weist die Trommel an ihrem Mantel eine verschließbare Füllöffnung auf. Durch Anbringen der verschließbaren Füllöffnung am Trommelmantel kann erforderlichenfalls das behandelte Fleisch in einfacher Weise in einen Vorratsbehälter od.dgl. umgefüllt werden.

Um eine möglichst ungleichmäßige Bewegung der zu behandelten Fleischstücke in der Bearbeitungseinrichtung sicherzustellen ist in vorteilhafter Weise die Trommel quaderförmig ausgebildet und die Rotationsachse gleich der Raumdiagonalen des Quaders gewählt. Durch entsprechende Lagerung der Trommel, Äderung der Drehzahl sowie intervallweisem Stillstand der Trommel ist es möglich, eine Störung des regelmäßigen Bewegungsablaufes der Trommel zu erreichen, um in der Folge eine noch raschere Behandlung des Fleisches zu erreichen.

In vorteilhafter Weise ist die Einrichtung so ausgebildet, daß die Antriebswelle als Hohlwelle ausgebildet ist und mit einer Saugleitung verbindbar ist. Dadurch, daß die Antriebswelle als Hohlwelle ausgebildet ist, ist es möglich das Fleisch in der Trommel, bevor es der Behandlung mit Lake unterzogen wird, einer Vakuumbehandlung zu unterwerfen.

Mit einer derartigen Lake können entsprechende Gewürze zugegeben werden, wobei die Zugabe von Gewürzen in die Lake eine wesentlich bessere und dauerhafte Aufnahme der Gewürze von den Fleischstücken gewährleistet. Die Verwendung von Gewürzen kann hiebei auch geschmacklich wirksame Konservierungsmittel umfassen und in einer derartigen Lake können beispielsweise Zitronensäure, Glutamate in Lösung od.dgl. eingesetzt werden.

Wenn die auf diese Weise vorbereiteten Fleischstücke nicht unmittelbar verarbeitet werden können, können die geschüttelten und mit Lake angereicherten Fleischstücke auch gelagert werden, wobei es sich in diesen Fällen empfiehlt, vor der tatsächlichen Zubereitung eine kurze Nachbehandlung durch neuerliches Schütteln oder Massieren vorzunehmen.

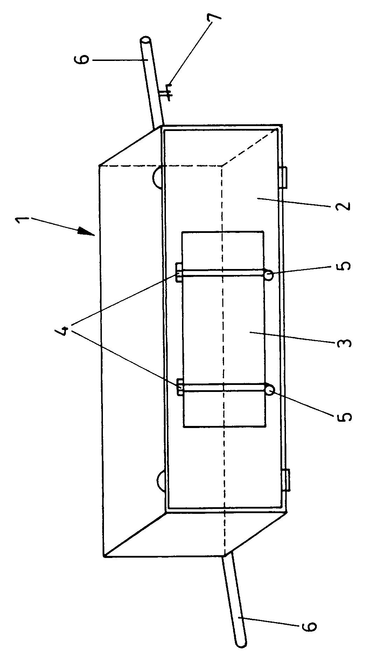

Die Erfindung wird nachfolgend an Hand eines in der Zeichnung dargestellten Ausführungsbeispiels näher erläutert. Die Figur zeigt eine schematische Darstellung einer für das Verfahren nach der vorliegenden Erfindung einsetzbaren Trommel. Die quaderförmig ausgebildete Trommel 1 weist hiebei an ihrer Vorderseite 2 eine durch einen Deckel 3 verschlossene Füllöffnung auf. Der Deckel 3 ist hiebei über schematische dargestellte Scharniere 4 an der Vorderseite 2 der Trommel 1 angelenkt und durch schematisch angedeutete Schließen 5 dicht mit der Trommel 1 verschließbar.

Die Trommel 1 weist zwei Fortsätze 6 auf, welche die Antriebswelle für die Trommel 1 darstellen. Die Antriebswellen 6 werden, um die Trommel 1 in entsprechende Schüttelbewegung zu versetzen, in entsprechende, nicht dargestellte, insbesondere exzentrische Lagerungen eingesetzt und über ein Getriebe mit einem ebenfalls, nicht dargestellten Motor verbunden.

In vorteilhafter Weise sind die Antriebswellen 6 als Hohlwellen ausgebildet, so daß über den schematisch angedeuteten Anschluß 7 die Antriebswellen 6 mit einer nicht dargestellten Saugleitung verbindbar sind. Auf diese Weise ist es möglich das in der Trommel 1 befindliche Fleisch vor seiner Behandlung mit Lake einer Vakuumehandlung auszusetzen. Aus diesem Grund ist der Deckel 3 an der Vorderseite 2 der Trommel 1 vakuumdicht ausgebildet.

## Patentansprüche

1. Verfahren zum Behandeln von Fleisch zur Erzielung einer längeren Haltbarkeit und zur Erzielung einer besseren Konsistenz bei der nachfolgenden Zubereitung, wobei das Fleisch gemeinsam mit einer gegebenenfalls Gewürze und Salz enthaltenden Lake in einem geschlossenen Behälter (1) einer Schüttelbewegung unterworfen wird, wobei die Menge der Lake 10 bis 20 Gew.-% der Fleischmenge beträgt, dadurch gekennzeichnet, daß die Lake zu 30 bis 50 Gew.-%, in Form von Eis, eingesetzt wird.

2. Vorrichtung zum Behandeln von Fleisch zur Erzielung einer längeren Haltbarkeit und zur Erzielung einer besseren Konsistenz bei der nachfolgenden Zubereitung, mit einem geschlossenen Behälter (1) zur Ausübung einer Schüttelbewegung des Fleisches gemeinsam mit einer gegebenenfalls Gewürze und Salz enthaltenden Lake, gekennzeichnet durch eine rotierbar gelagerte geschlossene Trommel (1) mit im wesentlichen horizontaler Rotationsachse, welche durch einen Deckel (1) verschließbar und zur Rotation um ihre Achse antreibbar ist, wobei die Längsachse der Trommel (1) die Rotationsachse unter Einschluß eines spitzen Winkels schneidet und/oder der Querschnitt der Trommel (1) von der Kreisform abweicht.

3. Vorrichtung nach Anspruch 2, dadurch gekennzeichnet, daß die Drehrichtung des Trommelantriebs umkehrbar ist.

4. Vorrichtung nach Anspruch 3, dadurch gekennzeichnet, daß der Radius (r) der Trommel und die Winkelgeschwindigkeit ($\omega$) derselben so gewählt sind, daß $r \times \omega^2 < g$ ist, wobei g die Erdbeschleunigung bedeutet.

5. Vorrichtung nach Anspruch 2, 3 oder 4, dadurch gekennzeichnet, daß die Trommel (1) an ihrem Mantel eine verschließbare Füllöffnung (3) aufweist.

6. Vorrichtung nach einem der Ansprüche 2 bis 4, dadurch gekennzeichnet, daß die Trommel (1) quaderförmig ausgebildet ist und die Rotationsachse gleich der Raumdiagonalen des Quaders gewählt ist.

7. Vorrichtung nach einem der Ansprüche 2 bis 5, dadurch gekennzeichnet, daß die Antriebswelle (6) als Hohlwelle ausgebildet ist und mit einer Saugleitung verbindbar ist.

## Claims

1. Process for treating meat to achieve improved keeping quality and to achieve better consistency in the subsequent preparation, the meat, together with a brine which may or may not contain spice and salt, being subjected in a closed vessel (1) to a shaking movement, the amount of brine being 10 to 20% by weight of the amount of meat, characterized in that 30 to 50% by weight of the brine is used in the form of ice.

2. Apparatus for treating meat to achieve improved keeping quality and to achieve better consistency in the subsequent preparation, having a closed vessel (1) for exerting a shaking movement on the meat together with a brine which may or may not contain spice and salt, characterized by a rotatably mounted closed drum (1) having an essentially horizontal axis of rotation, which drum can be closed by a cover (1) and can be driven to rotate about its axis, the longitudinal axis of the drum (1) intersecting the axis of rotation at an acute angle and/or the cross-section of the drum (1) departing from the circular shape.

3. Apparatus according to Claim 2, characterized in that the direction of rotation of the drum drive is reversible.

4. Apparatus according to Claim 3, characterized in that the radius (r) of the drum and the angle of velocity ($\omega$) of the same are chosen so that r x $\omega^2$ < g, g denoting the acceleration due to gravity.

5. Apparatus according to Claim 2, 3 or 4, characterized in that the drum (1) is provided with a closable filler opening (3) on its shell.

6. Apparatus according to one of Claims 2 to 4, characterized in that the drum (1) is constructed in parallelepipedal shape and the axis of rotation is chosen to be identical to the body diagonal of the parallelepiped.

7. Apparatus according to one of Claims 2 to 5, characterized in that the drive shaft (6) is constructed as a hollow shaft and can be connected to a suction line.

**Revendications**

1. Procédé pour le traitement de viande, pour obtenir une plus longue capacité de conservation et pour obtenir une meilleure consistance lors de la préparation suivante, procédé dans lequel la viande est soumise, avec une saumure contenant éventuellement des aromates et du sel, dans un récipient (1) clos, à un mouvement de secousses, la quantité de la saumure représentant 10 à 20 % en poids de la quantité de viande, procédé caractérisé en ce que la saumure est mien place à 30 à 50 % en poids, sous forme de glace.

2. Dispositif pour le traitement de viande, pour obtenir une plus longue capacité de conservation et pour obtenir une meilleure consistance lors de la préparation suivante, ce dispositif comportant un récipient (1) clos pour l'exercice d'un mouvement de secousses de la viande ensemble avec une saumure contenant éventuellement des aromates et du sel, dispositif caractérisé par un tambour (1) monté rotatif en ayant un axe de rotation essentiellement horizontal, ce tambour pouvant être obturé par un couvercle (1) et pouvant être entraîné en rotation autour de son axe, l'axe longitudinal du tambour (1) coupant l'axe de rotation en incluant un angle aigü et/ou la section transversale du tambour (1) s'écartant de la forme circulaire.

3. Dispositif selon la revendication 2, caractérisé en ce que le sens de rotation de l'entraînement du tambour peut être inversé.

4. Dispositif selon la revendication 3, caractérisé en ce que le rayon (r) du tambour et la vitesse angulaire ($\omega$)) de ce tambour sont choisis de manière que

r x $\omega^2$ < g,

formule dans laquelle g représente l'accélération de la pesanteur.

5. Dispositif selon la revendication 2, 3 ou 4, caractérisé en ce que le tambour (1) présente à son enveloppe une ouverture (1), obturable, pour le remplissage.

6. Dispositif selon l'une des revendications 2 à 4, caractérisé en ce que le tambour (1) a une forme parallélipipédique et l'axe de rotation est choisi égal à la diagonale dans l'espace du parallépipède.

7. Dispositif selon l'une des revendications 2 à 5, caractérisé en ce que l'arbre (6) d'entraînement est constitué comme un arbre creux et peut être relié à un conduit d'aspiration.